(19) Europäisches Patentamt
European Patent Office
Office européen des brevets

(11) **EP 2 759 403 B1**

(12) **EUROPÄISCHE PATENTSCHRIFT**

(45) Veröffentlichungstag und Bekanntmachung des Hinweises auf die Patenterteilung:
**27.04.2016 Patentblatt 2016/17**

(51) Int Cl.:
*B32B 27/08* (2006.01)   *E04D 12/00* (2006.01)
*E04B 1/62* (2006.01)

(21) Anmeldenummer: **13153018.0**

(22) Anmeldetag: **29.01.2013**

(54) **Feuchtevariable gerichtete Dampfbremse**

Humidity adaptive vapour retarder

Barrière pare-vapeur orientée variable selon l'humidité

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.07.2014 Patentblatt 2014/31**

(73) Patentinhaber: **Silu Verwaltung AG**
**6045 Meggen (CH)**

(72) Erfinder:
• **Die Erfinder haben auf ihre Nennung verzichtet.**

(74) Vertreter: **Lang, Johannes et al**
**Bardehle Pagenberg Partnerschaft mbB**
**Patentanwälte, Rechtsanwälte**
**Prinzregentenplatz 7**
**81675 München (DE)**

(56) Entgegenhaltungen:
**EP-A1- 2 554 758      DE-A1- 19 902 102**
**US-A1- 2007 015 424   US-A1- 2007 283 652**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 759 403 B1

**Beschreibung**

Die vorliegende Erfindung betrifft eine feuchtevariable gerichtete Dampfbremse, ihre Verwendung zur Abdichtung von Gebäuden sowie ein diese Dampfbremse umfassendes System.

Dampfbremsen werden üblicherweise in Dachkonstruktionen von Gebäuden eingesetzt, um die Diffusion von Wasserdampf in die Konstruktion zu kontrollieren. Sie sollen das Eindringen von Feuchte in Dämmschichten verhindern, aber gleichzeitig ein Austrocknen von Gebäuden zulassen. Daneben sollen sie die Aufgaben einer Luftdichtschicht übernehmen.

Ein Maß für den Widerstand, den eine Bauteilschicht der Wasserdampfdiffusion entgegensetzt, ist der $s_d$-Wert, der als wasserdampfdiffusionsäquivalente Luftschichtdicke definiert ist und das Produkt aus Wasserdampfdiffusionswiderstandszahl und Dicke der Schicht darstellt. Je höher der $s_d$-Wert liegt, desto größer ist der Widerstand. Ein $s_d$-Wert von 2 m bedeutet, dass die Schicht der Wasserdampfdiffusion einen identischen Widerstand entgegensetzt wie eine 2 m dicke Luftschicht. Entsprechend bedeutet ein $s_d$-Wert von 10 m, dass der Widerstand der Schicht einer 10 m dicken Luftschicht entspricht. Die Wasserdampfdiffusion durch eine Schicht mit einem $s_d$-Wert von 10 m ist somit langsamer als bei einer Schicht mit einem $s_d$-Wert von 2 m.

Aus dem Stand der Technik sind unterschiedliche Dampfbremsen bekannt. DE 101 11 319 A1 betrifft eine Dampfbremse aus einem Material, das einen von der Umgebungsfeuchtigkeit abhängigen $s_d$-Wert aufweist, dergestalt, dass bei einer relativen Feuchte im Bereich von 20 bis 60 % oder von 30% bis 50% der $s_d$-Wert 5-10 m und bei einer relativen Feuchte im Bereich von 50 bis 95 % der $s_d$-Wert < 2 m oder < 1 m beträgt. Das Material kann Polyethylen oder Polypropylen sein, das als polaren Bestandteil Acrylsäure enthält. Aus der EP 1 372 956 B1 ist die Verwendung von Ionomeren in Dampfbremsen bekannt. DE 198 57 483 A1 beschreibt dreischichtige Dachunterspannbahnen, wobei die mittlere Schicht als Klebeschicht ausgebildet ist und einen von der Umgebungsfeuchtigkeit abhängigen $s_d$-Wert aufweist. DE 199 02 102 A1 betrifft einen Verbundwerkstoff aus mindestens drei Schichten, der neben einer Luftdichtungsfunktion die Aufgabe hat, Schad- oder Giftstoffe zurückzuhalten.

DE 199 44 819 A1 offenbart Dampfbremsen, bei denen ein dünner Film auf ein Vlies aufgebracht ist und die Wasserdampfdurchlässigkeit von der Filmseite her größer ist als von der Vliesseite.

Aus dem Gebrauchsmuster AT 009 694 U2 ist eine Dampfbremse bekannt, deren Wasserdampfdiffusionswiderstand richtungsabhängig ist und die mindestens drei Schichten umfasst, davon zwei unterschiedlich wasserdampfsperrende Außenschichten und eine mittlere feuchtigkeitsspeichernde Schicht.

EP 0 821 755 A1 offenbart eine Dampfbremse, deren Wasserdampfdiffusionswiderstand von der Umgebungsfeuchtigkeit abhängt, dergestalt, dass bei einer relativen Umgebungsfeuchte von 30 % bis 50 % der $s_d$-Wert 2-5 m und bei einer relativen Umgebungsfeuchte von 60 % bis 80 % der $s_d$-Wert < 1 m beträgt. Damit soll im Sommer, wenn die Umgebungsfeuchte in der Regel höher ist, der Diffusionswiderstand geringer sein, um die Austrocknung der Isolierung zu fördern, während im Winter bei in der Regel niedrigerer Feuchte der Diffusionswiderstand höher ist. Als feuchtevariables Material wird Polyamid offenbart.

Die nachveröffentlichte EP 2 554 758 A1 offenbart eine Dampfbremse mit einer ersten Schicht mit einem $s_d$-Wert von 2 bis 5 m bei einer relativen Umgebungsfeuchte von 30 % bis 50 % und einem $s_d$-Wert < 1 m bei einer relativen Feuchte von 60 % bis 80 % sowie einer zweiten Schicht mit einem $s_d$-Wert > 0,2 m bei einer relativen Feuchte von 80 % bis 100 %.

Die US 2007/0015424 A1 betrifft Laminate, bei denen ein Baumaterial mit einer Dampfbremse mit feuchtevariabler Eigenschaft verklebt ist, wobei die Dampfbremse Ethylen-Vinylalkohol (EVOH) enthält.

Bei den Dampfbremsen aus Polyamid tritt das Problem auf, dass in Räumen mit hoher Feuchtigkeit, wie Bad oder Küche, auch im Winter eine hohe Wasserdampfdiffusion stattfindet, was zu Kondensation von Wasser in der Dachisolierung und / oder in der Außenwanddämmung und damit zu Bauschäden führen kann.

Aufgabe der vorliegenden Erfindung war es, dieses Problem unter Beibehaltung der gewünschten Eigenschaften einer Dampfbremse zu beheben.

Zur Lösung dieser Aufgabe wird erfindungsgemäss eine Dampfbremse aus mindestens zwei Schichten vorgeschlagen, wobei eine Schicht feuchtevariabel ist und die andere Schicht im Wesentlichen nicht feuchtevariabel ist.

Somit betrifft die Erfindung eine Dampfbremse gemäß Anspruch 1. Die Dampfbremse umfasst mindestens zwei Schichten, wobei eine Schicht (Schicht 1) feuchtevariabel ist und der Quotient für den Wasserdampfdiffusionswiderstand von dem $s_d$-Wert bei 25% mittlerer relativer Luftfeuchtigkeit (gemäss DIN EN ISO 12572:2001 Satz A / Dry Cup) zu dem $s_d$-Wert bei 71.5% mittlerer relativer Luftfeuchtigkeit (gemäss DIN EN ISO 12572:2001 Satz C / Wet Cup) größer 3 ist, und die andere Schicht (Schicht 2) im wesentlichen feuchteunabhängig ist, bevorzugt feuchteunabhängig ist, und der Quotient von dem $s_d$-Wert bei 25% mittlerer relativer Luftfeuchtigkeit (gemäss DIN EN ISO 12572:2001 Satz A / Dry Cup) zu dem $s_d$-Wert bei 71.5% mittlerer relativer Luftfeuchtigkeit (gemäss DIN EN ISO 12572:2001 Satz C / Wet Cup) kleiner 1.5 ist. Bevorzugt weisen die zwei Schichten zusammen (Schicht 1 und Schicht 2) eine Dicke von 20 bis 550 $\mu$m auf. Liegen weitere Schichten vor, beträgt die Gesamtdicke der Dampfbremse vorzugsweise nicht mehr als 700 $\mu$m.

Daneben betrifft die Erfindung die Verwendung der Dampfbremse zur Abdichtung von Gebäudehüllen sowie ein System, das die Dampfbremse und ein Bauteil oder Material, das im Baubereich in der Gebäudehülle abzudichten ist, umfasst. Bevorzugte Ausführungsformen und Ausgestaltungen der Erfindung sind in der nachfolgenden Beschreibung und den Ansprüchen definiert.

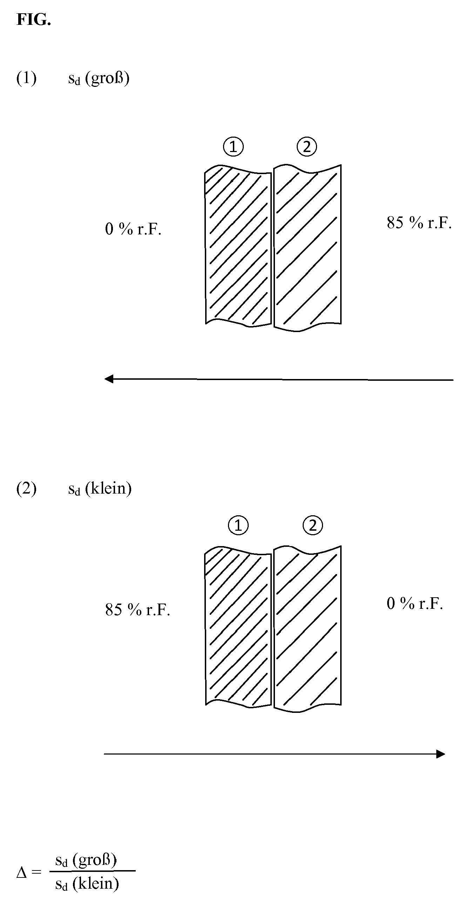

Die Figur zeigt einen Versuchsaufbau zur Messung der Richtungssensitivität einer Dampfbremse.

Erfindungsgemäss umfasst die Dampfbremse mindestens zwei Schichten (Schicht 1 und Schicht 2). Eine der beiden Schichten, die Schicht 1, ist feuchtevariabel. Dies bedeutet, dass sie einen von der relativen Luftfeuchtigkeit abhängigen $s_d$-Wert zeigt. Die andere Schicht, Schicht 2, ist feuchteunabhängig oder im Wesentlichen feuchteunabhängig, also nicht-feuchtevariabel. Dies bedeutet, dass sie einen von der relativen Luftfeuchtigkeit unabhängigen $s_d$-Wert oder im Wesentlichen unabhängigen $s_d$-Wert zeigt.

Vorliegend bezieht sich der $s_d$-Wert auf eine Bestimmung gemäss DIN EN ISO 12572:2001 mit dem Messgerät GINTRONIC GraviTest 6300 nach der Dry Cup / Wet Cup Methode. Bei dieser Methode werden $s_d$-Werte bei 23 °C im Trockenbereich (0% zu 50 % relative Luftfeuchtigkeit; DIN EN ISO 12572:2001 Satz A / Dry Cup, 25% mittlere relative Luftfeuchtigkeit), (0% zu 85 % relative Luftfeuchtigkeit; DIN EN ISO 12572:2001 Satz B / Dry Cup, 42.5% mittlere relative Luftfeuchtigkeit) und im Feuchtbereich (50% zu 93 % relative Luftfeuchtigkeit; DIN EN ISO 12572:2001 Satz C / Wet Cup, 71.5% mittlere relative Luftfeuchtigkeit) bestimmt. Die Messung erfolgt mittels eines Prüfgefäßes analog DIN EN ISO 12572:2001 Anhang C. Das Prüfgefäß wird durch den Probenkörper, die erfindungsgemässe Dampfbremse, verschlossen. Innerhalb des Prüfgefäßes wird das gewünschte Klima durch die Verwendung von Trockenmittel oder Salzlösungen eingestellt. Das Gegenklima außerhalb des Prüfgefäßes wird mittels Klimakammer realisiert. Somit bedeutet 25 % mittlere relative Luftfeuchtigkeit, dass bei der Messung an der jeweiligen Schicht auf einer Seite eine relative Luftfeuchtigkeit von 0 % (vorzugsweise innerhalb des Prüfgefäßes) und auf der anderen Seite eine relative Luftfeuchtigkeit von 50 % (vorzugsweise außerhalb des Prüfgefäßes in der Klimakammer) anliegt. Entsprechend sind bei 71.5% mittlerer relativer Luftfeuchtigkeit die relativen Luftfeuchtigkeiten 50 % und 93 % (beispielsweise kann eine relative Luftfeuchtigkeit von 93 % mittels einer gesättigten, wässrigen Ammoniumdihydrogenphosphat-Lösung ($(NH_4)H_2PO_4$) innerhalb des Prüfgefäßes realisiert werden). Für die Bestimmung einer mittleren relativen Luftfeuchtigkeit von 42.5% wird das Verfahren nach DIN EN ISO 12572:2001 Satz B angewendet. In der Klimakammer außerhalb des Prüfgefäßes wird eine relative Luftfeuchtigkeit von 85% verwendet und innerhalb des Prüfgefäßes wird mittels Trockenmittel eine ungefähre relative Luftfeuchtigkeit von 0% eingestellt.

Der $s_d$-Wert einer einzelnen Schicht wird durch die Wasserdampfdiffusionswiderstandszahl $\mu$ und die verwendete Schichtdicke definiert:

$$s_d\text{-Wert [m]} = \text{Wasserdampfdiffusionswiderstandszahl } \mu \ \text{ x } \ \text{Schichtdicke [m]}$$

Somit können definierte $s_d$-Werte einer Einzelschicht über Materialien oder Materialkombinationen erhalten werden, welche entweder eine hohe Wasserdampfdiffusionswiderstandszahl $\mu$ und eine geringe Schichtdicke oder eine niedrige Wasserdampfdiffusionswiderstandszahl $\mu$ und eine hohe Schichtdicke aufweisen.

Die Gesamtdicke der Schicht 1 und Schicht 2 liegt vorzugsweise im Bereich von 55 $\mu$m bis 550 $\mu$m, bevorzugt von 55 $\mu$m bis 475 $\mu$m, stärker bevorzugt von 55 $\mu$m bis 400 $\mu$m und am meisten bevorzugt von 80 $\mu$m bis 350 $\mu$m, jeweils bezogen auf die Schicht 1 und 2. In einer anderen bevorzugten Ausführungsform liegt die Gesamtdicke der Schicht 1 und Schicht 2 zwischen 75 $\mu$m und 550 $\mu$m. Insbesondere bevorzugt ist ein Bereich von 90 $\mu$m bis 500 $\mu$m, stärker bevorzugt von 100 $\mu$m bis 350 $\mu$m. Dicken über 550 $\mu$m können für die Verarbeitung als Dampfbremse in Bahnenform zu Steifigkeitsproblemen führen, sind jedoch nicht ausgeschlossen.

Die Schicht 1 hat vorzugsweise eine Schichtdicke im Bereich von 10 $\mu$m bis 200 $\mu$m, bevorzugt von 20 $\mu$m bis 175 $\mu$m, stärker bevorzugt von 30 $\mu$m bis 150 $\mu$m und am bevorzugtesten von 40 $\mu$m bis 125 $\mu$m. In einer anderen bevorzugten Ausführungsform liegt die Dicke der Schicht 1 zwischen 50 $\mu$m und 200 $\mu$m. Insbesondere bevorzugt ist ein Bereich von 60 $\mu$m bis 150 $\mu$m.

Geeignete Materialien für die feuchtevariable Schicht 1 sind Polyamid, zum Beispiel Polyamid 6, Polyamid 66 und weitere Polyamid-Typen. Weiterhin sind Ionomere geeignet. Ionomere sind thermoplastische Kunststoffe, welche zumindest teilweise funktionelle Gruppen, wie Säuregruppen z.B. Sulfonsäure oder Acrylsäure, enthalten, oder bei welchen solche Gruppen in den Bausteinen der Polymerketten vorkommen können. Diese funktionellen Gruppen sind teilweise oder vollständig durch Alkali- oder Erdalkali-Ionen oder andere LewisSäuren, wie zum Beispiel Aluminium- oder Zink-Kationen, neutralisiert. Aus der EP 1 372 956 B1 ist die Verwendung von Ionomeren in Dampfbremsen bekannt. Für die Schicht 1 sind weiterhin Materialien möglich, welche basische funktionelle Gruppen wie z.B. Ammoniumgruppen enthalten. Ebenfalls geeignet sind Materialzusammensetzungen der oben genannten Materialien mit anderen Materialtypen, welche Zusammensetzungen die für die Feuchtevariabilität der Schicht 1 notwendige Wasserdampfdurchlässigkeit aufweisen. So sind zum Beispiel Abmischungen von Polyamid mit Polyester oder Ethylenvinylacetat (EVA) möglich. Das Material für Schicht 1 kann weiterhin auch mineralische Zuschläge, wie zum Beispiel Calciumcarbonat ($CaCO_3$), Silikate und/oder Flammschutzmittel, enthalten.

Die Schicht 1 hat vorzugsweise einen Quotienten für den Wasserdampfdiffusionswiderstand von dem $s_d$-Wert bei 25% mittlerer relativer Luftfeuchtigkeit zu dem $s_d$-Wert bei 71.5% mittlerer relativer Luftfeuchtigkeit größer 4 und am bevorzugtesten größer 5.

Die Schicht 2 hat einen im Wesentlichen konstanten $s_d$-Wert. Der Quotient von dem $s_d$-Wert bei 25% mittlerer relativer Luftfeuchtigkeit (gemäss DIN EN ISO 12572:2001 Satz A / Dry Cup) zu dem $s_d$-Wert bei 71.5% mittlerer relativer Luftfeuchtigkeit (gemäss DIN EN ISO 12572:2001 Satz C / Wet Cup) ist kleiner 1.5. Bevorzugt weist die Schicht 2 bei einer mittleren relativen Luftfeuchtigkeit von 71.5% (Messung gemäss DIN EN ISO 12571 Satz C) einen $s_d$-Wert im Bereich von 1 m bis 20 m, bevorzugt von 1 m bis 15 m und am bevorzugtesten von 1 m bis 10 m auf. In einer anderen bevorzugten Ausführungsform liegt der $s_d$-Wert im Bereich von 0.2 m bis 20 m, insbesondere von 0.3 m bis 10 m.

Die Schicht 2 hat vorzugsweise eine Dicke von 40 $\mu$m bis 350 $\mu$m, stärker bevorzugt von 40 $\mu$m bis 300 $\mu$m und noch bevorzugter von 40 $\mu$m bis 250 $\mu$m und am bevorzugtesten von 40 $\mu$m bis 225 $\mu$m.

Die Materialien für die feuchteunabhängige Schicht 2 sind Materialien mit einem von der angelegten relativen Luftfeuchtigkeit im Wesentlichen unabhängigen $s_d$-Wert. Die Materialien sind Polyester, Thermoplastische Ether-Ester-Copolymere (TPEE), Polyolefine, Polyethylen (PE), Polyethylen hoher Dichte (HDPE), Polypropylen (PP), Ethylenvinylacetat (EVA), Polylactide, auf Stärke basierende Polymere, Polyacrylate, Thermoplastische Polyurethane (TPU), und Kombinationen davon, deren $s_d$-Wert im genannten Bereich liegt. Möglich sind auch Abmischungen, zum Beispiel von Thermoplastischen Ether-Ester-Copolymeren (TPEE) mit EVA oder von Thermoplastischen Polyurethanen (TPU) mit EVA oder mit Polyester. Das Material für die Schicht 2 kann mineralische Zuschläge, wie zum Beispiel Calciumcarbonat ($CaCO_3$), Silikate und/oder Flammschutzmittel enthalten. Des Weiteren kann diese Schicht auch aus geschäumten Materialien, wie beispielsweise wie den zuvor Genannten, bestehen.

Die Schicht 2 kann aus einer Folie oder aus einem Film ausgebildet werden. Unter Film versteht man vorliegend eine geschlossene, luftdichte Schicht. Dieser Film kann entweder durch Extrusion der aus dem Film bestehenden Komponenten oder durch Beschichtung der filmbildenden Komponenten in jeglicher Form dargestellt werden. Bei der Beschichtung ist ein nachträglicher Prozess notwendig, welcher aus den filmbildenden Komponenten den Film erzeugt, dies ist zum Beispiel ein Trocknungs-, Vernetzungs- oder anderweitiger Aktivierungsprozess. Bei der Extrusion hingegen ist der Film beim oder innerhalb 30 Sekunden nach dem Austritt aus dem Extruder bereits gebildet und unterliegt nur einer nachfolgenden Temperaturänderung.

Die Verbindung der Schichten 1 und 2 zur Herstellung der Dampfbremse kann durch Verklebung mit einem Klebstoff, punktuell, teilweise oder vollflächig, weiterhin durch Kaschierung, Laminierung, Kalandrierung, oder durch Beschichtung einer dieser Schichten auf die andere erfolgen. Ebenfalls ist eine Herstellung der erfindungsgemässen Folie als Mehrschicht-Folie mittels Extrusion im Blas- oder Cast/Gieß-Verfahren an Mehrschichtextrudern möglich. Ein solches bevorzugtes Verfahren ist in der WO 2009/065853 A1 beschrieben. In diesem Verfahren wird die Haftung einer nicht kompatiblen Schicht, beispielsweise einer Polyesterschicht zu Polyamid, mittels geeigneten Haftvermittlern oder modifizierten Polymeren erreicht. Möglich ist auch eine direkte Herstellung der Mehrschichtfolie mittels Extrusion im Blas- oder Cast/Giessverfahren an Mehrschichtextrudern ohne Haftvermittler bei Verwendung von TPU als Schicht 2 in Reinform oder in Mischung mit anderen oben genannten Verbindungen.

Die Dampfbremse kann zusätzlich zu den Schichten 1 und 2 weitere Schichten umfassen. Besonders geeignet sind Schichten zur Erhöhung der mechanischen Festigkeit und/oder Wasserspeicherung. So sind zum Beispiel Schichten (Schicht 3) geeignet, welche zur Erhöhung der mechanischen Stabilität dienen, wie z.B. Verstärkungsgelege aus Polyester, Polyamid, Glas, Polyaramid oder Carbon. Eine solche Schicht kann zwischen den beiden Schichten (Schicht 1 und Schicht 2) oder auf einer Außenseite oder auf beiden Außenseiten aufgebracht sein. Wird nur eine Vliesschicht auf der Außenseite aufgebracht, so wird diese vorzugsweise auf die Außenseite von Schicht 1 (mit dem feuchtevariablen $s_d$-Wert) aufgebracht. Die Verbindung einer oder mehrerer weiterer Schichten zur Schicht 1 oder Schicht 2 oder zu beiden Schichten kann mittels Verklebung, Prägung, Verschweissung, Kaschierung oder Laminierung erfolgen. Ebenfalls kann die Oberfläche einer oder beider Außenschichten soweit angeschmolzen werden, dass bei einem gewissen Anpressdruck der weiteren Schicht eine dauerhafte Verbindung zwischen den einzelnen Schichten eintritt. Des Weiteren sind auch eine oder mehrere innenliegende Schichten (Schicht 4), d.h. zwischen Schicht 1 und Schicht 2, aus wasserdampfspeicherfähigen Materialien, wie zum Beispiel Vlies, Gewebe, Gelege oder Gewirke möglich. Diese können aus Materialien wie zum Beispiel Polyester, Polyamid bestehen, welche durch ihre hydrophile Eigenschaft eine Speicherung von Wasser ermöglichen. Auch sind hierfür Polyolefine wie zum Beispiel Polyethylen, Polypropylen geeignet, welche die Wasserspeicherung zwischen den Schichten durch Kapillarkräfte ermöglichen. Die Verbindung einer solchen Zwischenschicht mit mindestens zwei Schichten (Schicht 1 und Schicht 2) kann zur Darstellung der erfindungsgemässen Dampfbremse durch Verklebung mit einem Klebstoff punktuell oder vollflächig, durch Kaschierung, Laminierung, Kalandrierung oder durch Beschichtung von Schicht 1 und/oder Schicht 2 auf diese Zwischenschicht erfolgen. Geeignete Beschichtungsverfahren sind Extrusionsbeschichtung, Blas- und Cast/Gieß-Extrusionsverfahren, Dispersions- und Emulsionsbeschichtung. Ebenfalls kann die Oberfläche einer oder beider Außenschichten soweit angeschmolzen werden, dass bei einem gewissen Anpressdruck der weiteren Schicht eine dauerhafte Verbindung zwischen den einzelnen Schichten eintritt. Die Gesamtdicke der wirksamen Schichten 1 und 2 können zum Beispiel mit Hilfe einer geeigneten Mikrotomeinheit und einem entsprechenden Mikroskop bestimmt werden.

Darüber hinaus kann die erfindungsgemässe Folie mit einer Außenschicht (Schicht 5) kombiniert werden. Diese Außenschicht kann aus Vlies, bestehend aus Kunststoff, wie zum Beispiel Polyethylen, Polypropylen, Polyester, Polyamid, oder Zellstoff, wie zum Beispiel Viskose, Hanf, aus Gewebe, Gelege oder Gewirke erzeugt werden. Eine solche Schicht dient zur Veränderung der mechanischen Eigenschaften, d.h. zur Erhöhung der Reiss-, Dehnungs- oder Weiterreissfestigkeit. Zusätzlich kann sich damit der anwendungstechnische Vorteil einer verbesserten Haptik und/oder einer Orientierungshilfe zur technisch korrekten Verlegung der erfindungsgemässen Folie als Dampfbremse oder Dampfsperre für den Installateur ergeben.

Die Gesamtdicke der Dampfbremse, d.h. der Schicht 1, Schicht 2 und gegebenenfalls weiterer Schichten zusammen, liegt vorzugsweise im Bereich von 60 μm bis 700 μm, bevorzugt von 60 μm bis 600 μm, stärker bevorzugt von 80 μm bis 550 μm und am meisten bevorzugt von 100 μm bis 500 μm.

Die Wirkungsweise der Dampfbremse wird in der Figur veranschaulicht. Die Figur zeigt einen Versuchsaufbau zur Messung der Richtungssensitivität, wobei der obere Teil der Figur, bezeichnet mit (1), die Messanordnung für einen großen $s_d$-Wert zeigt und der untere Teil der Figur, bezeichnet mit (2), die Messanordnung für einen kleinen $s_d$-Wert zeigt. Die eingekreisten Ziffern 1 und 2 bezeichnen die Schicht 1 bzw. 2 der Dampfbremse. Die Schicht 1 ist feuchtevariabel, die Schicht 2 ist nicht feuchtevariabel. Die Werte 0% r.F. und 85% r.F. bezeichnen die relative Luftfeuchtigkeit, die an die angegebene Schicht 1 bzw. 2 anliegt. Der Pfeil zeigt den Wasserdampfdiffusionsstrom. In der Messanordnung gemäss (1) der Figur liegt somit eine relative Luftfeuchtigkeit von 85% an der nicht feuchtevariablen Schicht 2 an und der $s_d$-Wert ist größer als in der Messanordnung gemäss (2) der Figur, in welcher eine relative Luftfeuchtigkeit von 85% an der feuchtevariablen Schicht 1 anliegt. Der Quotient von $s_d$(groß) zu $s_d$(klein) ist als $\Delta$ definiert. Messtechnisch wird dieser Versuchsaufbau realisiert, indem entweder die Seite mit Schicht 1 als Außenseite der erfindungsgemässen Dampfbremse ins Innere des Prüfgefäßes und damit bei der Dry Cup-Methode (gemäss DIN EN ISO 12572:2001 Satz B) zum Trockenmittel oder nach außen vom Prüfgefäß (zur Klimakammer) orientiert ist.

Die erfindungsgemässe Dampfbremse weist im Wesentlichen bevorzugt bei einer mittleren relativen Luftfeuchtigkeit von 42.5% eine sehr ausgeprägte Richtungssensitivität der Wasserdampfdiffusion auf. Dies bedeutet, je nachdem an welche Seite der erfindungsgemässen Dampfbremse die höhere Feuchtigkeit angelegt wird, umso stärker wirkt sich die Wasserdampfdiffusionsdurchlässigkeit zur trockeneren Seite aus. Der gemäss DIN EN ISO 12572:2001 Satz B mit dem Messgerät GINTRONIC GraviTest 6300 bei den relativen Luftfeuchtigkeiten von 0% zu 85% und 23°C richtungsunterschiedlich gemessene $s_d$-Wert Quotient $\Delta$ (hoher $s_d$-Wert/kleiner $s_d$-Wert = $\Delta$) liegt im Bereich von 1.1 bis 15, bevorzugt von 1.2 bis 12, noch bevorzugter von 1.3 bis 8 und am bevorzugtesten von 1.4 bis 4. In einer weiter bevorzugten Ausführungsform weist die erfindungsgemässe Dampfbremse zusätzlich einen $s_d$-Wert des Gesamtverbundes (d.h. einschließlich aller Schichten) bei 71.5% mittlerer relativer Luftfeuchtigkeit (Messung nach DIN EN ISO 12572:2001 Satz C) von mindestens 1 m auf, bevorzugt größer 1 m. In einer anderen bevorzugten Ausführungsform beträgt der maximale $s_d$-Wert der erfindungsgemässen Dampfbremse bei 25% mittlerer relativer Luftfeuchtigkeit (Messung nach DIN EN ISO 12572:2001 Satz A) weniger als 40 m, bevorzugt weniger als 30 m, am bevorzugtesten weniger als 25 m und am meisten bevorzugt weniger als 20 m.

Die Erfindung betrifft auch die Verwendung der Dampfbremse zur Abdichtung von Gebäudehüllen. Die Dampfbremse kann in Dachkonstruktionen von Gebäuden eingesetzt werden, um die Wasserdampfdiffusion in eine gewünschte Richtung zu lenken.

Die Dampfbremse wird zum Beispiel unter dem Dach so angeordnet, dass Schicht 1 zum Dach zeigt und Schicht 2 innenseitig zum Raum zeigt. Auf diese Weise ist stets die Austrocknung der Dämmebene in den Innenraum gewährleistet, wohingegen die Rückfeuchtung bzw. Auffeuchtung in die Dämmung gehemmt wird. Wird in einem Dach zum Beispiel feuchtes Konstruktionsholz verwendet, kann die Austrocknung der Dachkonstruktion auch dann stattfinden, wenn der darunter liegende Raum über eine zeitweise hohe Raumfeuchte verfügt, wie zum Beispiel Badezimmer oder Küche.

Die erfindungsgemässe Dampfbremse ist feuchtevariabel und aufgrund ihrer Schichtenkombination richtungssensitiv in der Eigenschaft der Wasserdampfdurchlässigkeit. Damit kann sie zur gezielten Austrocknung von Dachkonstruktionen im Häuserbau verwendet werden, ohne dass in feuchten Räumen, wie z.B. Küchen und Bäder, eine ungewünschte Wanderung der Feuchte in die Konstruktion stattfindet. Zusätzlich zu der Eigenschaft der Richtungssensitivität trägt die Feuchtevariabilität der erfindungsgemässen Dampfbremse dazu bei, dass die Austrocknung der Dachkonstruktion und/oder der Dämmebene bei einem hohen Feuchtigkeitsanteil in der Dämmung wesentlich schneller stattfindet als bei einer ausschließlich richtungssensitiven Dampfbremse.

Zugleich steigt auch bei stetiger Abnahme des Feuchtigkeitsgehaltes in der Konstruktion der $s_d$-Wert für einen Wasserdampftransport von der Raumseite durch die erfindungsgemässe Dampfbremse in die Konstruktion, wodurch eine Rückfeuchtung bzw. Auffeuchtung der Konstruktion stets langsamer erfolgt als die Austrocknung in entgegengesetzter Wasserdampfdiffusionsrichtung.

Die Erfindung umfasst auch ein System, das die Dampfbremse und ein abzudichtendes Bauteil umfasst. Bei dem Bauteil kann es sich um ein Material handeln, das im Baubereich in der Gebäudehülle oder im Dachbereich abzudichten ist.

Die Erfindung wird anhand der folgenden Beispiele veranschaulicht, die bevorzugte Ausführungsformen der Erfindung zeigen, ohne deren Schutzbereich einzuschränken.

BEISPIELE

Beispiel 1

Eine 0.050 mm dicke Polyamid (PA)-Folie (z.B. das Produkt Isover Vario KM, bzw. Difunorm Vario) wird mit einer zweiten Folie von 0.152 mm Dicke, basierend auf einer Mischung aus Ethylen-Vinyl-Acetat (EVA) und einem thermoplastisch-elastomeren Ether-Ester-Blockcopolymer (TPE-E) gemäss Patent DE 10 2006 018 351 B4, verbunden. Die Verbindung dieser beiden Folien wird über eine Punktverklebung mit einem Schmelzkleber (*Hotmelt*) des Typs Alfa H 5000/0 der Firma Alfa Klebstoffe AG ausgeführt. Die Punktverklebung findet über ein quadratisches 10 mm Raster statt, in welchem jeder Kreuzungspunkt des Rasters einen im Durchmesser von 1 mm aufgetragenen Schmelzkleberpunkt enthält. Nach Auftragung dieser Punkte auf die Polyamid-Folie wird diese mit der zweiten Folie plan abgedeckt und mittels Anrollen durch eine Schaumstoffrolle angepresst.

Die entstandene Mehrschichtfolie weist eine Gesamtdicke von 0.202 mm außerhalb der Punktverklebung auf.

Die unten in Tabelle 1 aufgeführten $s_d$-Werte wurden gemäss der Dry Cup- bzw. Wet Cup-Methode, DIN EN ISO 12572:2001 Satz A, B und C, bestimmt, wobei die einzelnen Proben, wie angegeben, mit Schicht 1 bzw. Schicht 2 als der dem Prüfklima zugewandten Seite gemessen wurden. Vorliegend bedeutet r.F. die relative Luftfeuchtigkeit.

Tabelle 1

| Messung DRY CUP 0/50 DIN 12572 Satz A | Schicht 1 | Schicht 2 | Zur Prüfkammer (50% r.F.) zugewandte Seite | $s_d$-Wert [m] |
|---|---|---|---|---|
| 1 | PA 0.050mm | TPE-E/EVA 0.152mm | Schicht 1 | 5.0 |
| 2 | PA 0.050mm | TPE-E/EVA 0.152mm | Schicht 2 | 5.8 |
| 3 | PA 0.050mm | - | Einzelschicht 1 | 3.5 |
| 4 | - | TPE-E/EVA 0.152mm | Einzelschicht 2 | 1.7 |
| | | | | |
| Messung DRY CUP 0/85 DIN 12572 Satz B | Schicht 1 | Schicht 2 | Zur Prüfkammer (85% r.F.) zugewandte Seite | $s_d$-Wert [m] |
| 1 | PA 0.050mm | - | Einzelschicht 1 | 1.8 |
| 2 | - | TPE-E/EVA 0.152mm | Einzelschicht 2 | 1.7 |
| 3 | PA 0.050mm | TPE-E/EVA 0.152mm | Schicht 1 | 1.9 |
| 4 | PA 0.050mm | TPE-E/EVA 0.152mm | Schicht 2 | 4.1 |
| | | | | |
| Messung WET CUP 93/50 DIN 12572 Satz C | Schicht 1 | Schicht 2 | Zur Prüfkammer (50% r.F.) zugewandte Seite | $s_d$-Wert [m] |
| 1 | PA 0.050mm | TPE-E/EVA 0.152mm | Schicht 1 | 2.9 |

(fortgesetzt)

| Messung WET CUP 93/50 DIN 12572 Satz C | Schicht 1 | Schicht 2 | Zur Prüfkammer (50% r.F.) zugewandte Seite | $s_d$-Wert [m] |
|---|---|---|---|---|
| 2 | PA 0.050mm | TPE-E/EVA 0.152mm | Schicht 2 | 1.8 |
| 3 | PA 0.050mm | - | Einzelschicht 1 | 0.5 |
| 4 | - | TPE-E/EVA 0.152mm | Einzelschicht 2 | 1.6 |

Beispiel 2

Eine 0.050 mm dicke Polyamid (PA)-Folie (z.B. das Produkt Isover Vario KM, bzw. Difunorm Vario) wird mit einer zweiten Folie von 0.117 mm Dicke, basierend auf einer Mischung aus Ethylen-Vinyl-Acetat (EVA) und einem thermoplastisch-elastomeren Ether-Ester-Blockcopolymer (TPE-E) gemäss Patent DE 10 2006 018 351 B4, verbunden. Die Verbindung dieser beiden Folien wird über eine Punktverklebung mit einem Schmelzkleber (*Hotmelt*) des Typs Alfa H 5000/0 der Firma Alfa Klebstoffe AG ausgeführt. Die Punktverklebung findet über ein quadratisches 10 mm Raster statt, in welchem jeder Kreuzungspunkt des Rasters einen im Durchmesser von 1 mm aufgetragenen Schmelzkleberpunkt enthält. Nach Auftragung dieser Punkte auf die Polyamid-Folie wird diese mit der zweiten Folie plan abgedeckt und mittels Anrollen durch eine Schaumstoffrolle angepresst.

Die entstandene Mehrschichtfolie weist eine Gesamtdicke von 0.167 mm außerhalb der Punktverklebung auf.

Die unten in Tabelle 2 aufgeführten $s_d$-Werte wurden gemäss der Dry Cup- bzw. Wet Cup-Methode, DIN EN ISO 12572:2001 Satz A, B und C, bestimmt, wobei die einzelnen Proben, wie angegeben, mit Schicht 1 bzw. Schicht 2 als der dem Prüfklima zugewandten Seite gemessen wurden.

Tabelle 2

| Messung DRY CUP 0/50 DIN 12572 Satz A | Schicht 1 | Schicht 2 | Zur Prüfkammer (50% r.F.) zugewandte Seite | $s_d$-Wert [m] |
|---|---|---|---|---|
| 1 | PA 0.050mm | TPE-E/EVA 0.117mm | Schicht 1 | 4.6 |
| 2 | PA 0.050mm | TPE-E/EVA 0.117mm | Schicht 2 | 5.2 |
| 3 | PA 0.050mm | - | Einzelschicht 1 | 3.5 |
| 4 | - | TPE-E/EVA 0.117mm | Einzelschicht 2 | 1.3 |
| Messung DRY CUP 0/85 DIN 12572 Satz B | Schicht 1 | Schicht 2 | Zur Prüfkammer (85% r.F.) zugewandte Seite | $s_d$-Wert [m] |
| 1 | PA 0.050mm | - | Einzelschicht 1 | 1.8 |
| 2 | - | TPE-E/EVA 0.117mm | Einzelschicht 2 | 1.3 |
| 3 | PA 0.050mm | TPE-E/EVA 0.117mm | Schicht 1 | 2.0 |
| 4 | PA 0.050mm | TPE-E/EVA 0.117mm | Schicht 2 | 3.8 |
| | | | | |

(fortgesetzt)

| Messung WET CUP 93/50 DIN 12572 Satz C | Schicht 1 | Schicht 2 | Zur Prüfkammer (50% r.F.) zugewandte Seite | $s_d$-Wert [m] |
|---|---|---|---|---|
| 1 | PA 0.050mm | TPE-E/EVA 0.117mm | Schicht 1 | 2.4 |
| 2 | PA 0.050mm | TPE-E/EVA 0.117mm | Schicht 2 | 1.4 |
| 3 | PA 0.050mm | - | Einzelschicht 1 | 0.5 |
| 4 | - | TPE-E/EVA 0.117mm | Einzelschicht 2 | 1.2 |

Die in Abhängigkeit von der Orientierung der Dampfbremse gemessenen $s_d$-Werte veranschaulichen die Richtungssensitivität der Dampfbremse.

**Patentansprüche**

1. Dampfbremse, die mindestens zwei Schichten umfasst, wobei eine Schicht (Schicht 1) feuchtevariabel ist und der Quotient für den Wasserdampfdiffusionswiderstand von dem $s_d$-Wert bei 25% mittlerer relativer Luftfeuchtigkeit zu dem $s_d$-Wert bei 71.5% mittlerer relativer Luftfeuchtigkeit größer 3 ist, und die andere Schicht (Schicht 2) im wesentlichen feuchteunabhängig ist und der Quotient für den Wasserdampfdiffusionswiderstand von dem $s_d$-Wert bei 25% mittlerer relativer Luftfeuchtigkeit zu dem $s_d$-Wert bei 71.5% mittlerer relativer Luftfeuchtigkeit kleiner 1.5 ist, wobei sich der $s_d$-Wert jeweils auf eine Bestimmung gemäß ISO 12572:2001 bezieht, wobei die Schicht 2 eine Dicke von 40 $\mu$m bis 350 $\mu$m aufweist und wobei das Material für die Schicht 2 ausgewählt ist aus der Gruppe bestehend aus Polyester, Thermoplastische Ether-Ester-Copolymere (TPEE), Polyolefine, Polyethylene, Polyethylen hoher Dichte (HDPE), Polypropylen (PP), Ethylenvinylacetat (EVA), Polylactide, auf Stärke basierende Polymere, Polyacrylate, Thermoplastische Polyurethane (TPU), und Kombinationen davon.

2. Dampfbremse nach Anspruch 1, wobei die Schicht 1 und Schicht 2 zusammen eine Dicke im Bereich von 55 $\mu$m bis 550 $\mu$m, vorzugsweise zwischen 75 $\mu$m und 550 $\mu$m, aufweisen.

3. Dampfbremse nach Anspruch 1 oder 2, wobei die Schicht 1 eine Dicke im Bereich von 10 $\mu$m bis 200 $\mu$m, vorzugsweise zwischen 30 $\mu$m und 200 $\mu$m, aufweist.

4. Dampfbremse nach einem der Ansprüche 1 bis 3, wobei die Schicht 2 eine Dicke im Bereich von 40 $\mu$m bis 300 $\mu$m, vorzugsweise von 40 $\mu$m bis 225 $\mu$m, aufweist.

5. Dampfbremse nach einem der vorhergehenden Ansprüche, wobei das Material für die Schicht 1 Polyamid und/oder Ionomere enthält.

6. Dampfbremse nach einem der vorhergehenden Ansprüche, wobei für die Schicht 1 der Quotient für den Wasserdampfdiffusionswiderstand von dem $s_d$-Wert bei 25% mittlerer relativer Luftfeuchtigkeit zu dem $s_d$-Wert bei 71.5% mittlerer relativer Luftfeuchtigkeit größer 4, vorzugsweise größer 5, ist.

7. Dampfbremse nach einem der vorhergehenden Ansprüche, wobei die Schicht 2 bei 71.5% mittlerer relativer Luftfeuchtigkeit einen $s_d$-Wert im Bereich von 1 m bis 20 m, vorzugsweise von 1 m bis 15 m, aufweist.

8. Dampfbremse nach einem der vorhergehenden Ansprüche, wobei die Schicht 2 als Folie oder Film ausgebildet ist.

9. Dampfbremse nach einem der vorhergehenden Ansprüche, wobei die Schichten 1 und 2 durch Verklebung mit Klebstoff, Kaschierung, Kalandrierung oder durch Beschichtung einer Schicht auf die andere miteinander verbunden werden.

10. Dampfbremse nach einem der Ansprüche 1 bis 9, wobei die Schichten 1 und 2 als Mehrschichtfolie hergestellt werden.

**11.** Dampfbremse nach einem der vorhergehenden Ansprüche, umfassend wenigstens eine weitere Schicht, insbesondere zur Erhöhung der mechanischen Festigkeit und/oder Wasserspeicherung.

**12.** Dampfbremse nach einem der vorhergehenden Ansprüche, wobei ihre Gesamtdicke im Bereich von 60 $\mu$m bis 700 $\mu$m, vorzugsweise von 60 $\mu$m bis 600 $\mu$m, liegt.

**13.** Verwendung einer Dampfbremse nach einem der vorhergehenden Ansprüche zur Abdichtung von Gebäudehüllen.

**14.** System, umfassend eine Dampfbremse nach einem der Ansprüche 1 bis 12 und ein abzudichtendes Bauteil.

**Claims**

**1.** Vapor barrier comprising at least two layers, of which one layer (layer 1) is humidity-variable and the quotient for the water vapor diffusion resistance of the $s_d$ value at 25% mean relative air humidity to the $s_d$ value at 71.5% mean relative air humidity is greater than 3, and the other layer (layer 2) is essentially humidity-independent and the quotient for the water vapor diffusion resistance of the $s_d$ value at 25% mean relative air humidity to the $s_d$ value at 71.5% mean relative air humidity is less than 1.5, wherein the $s_d$ value in each case relates to a determination according to ISO 12572:2001, wherein the layer 2 has a thickness in the range of 40 $\mu$m to 350 $\mu$m, and wherein the material for the layer 2 is selected from the group consisting of polyester, thermoplastic ether-ester copolymers (TPEE), polyolefins, polyethylenes, high density polyethylene (HDPE), polypropylene (PP), ethylene vinyl acetate (EVA), polylactides, starch-based polymers, polyacrylates, thermoplastic polyurethanes (TPU), and combinations thereof.

**2.** Vapor barrier according to claim 1, wherein the layer 1 and layer 2 together have a thickness in the range of 55 $\mu$m to 550 $\mu$m, preferably between 75 $\mu$m and 550 $\mu$m.

**3.** Vapor barrier according to claim 1 or 2, wherein the layer 1 has a thickness in the range of 10 $\mu$m to 200 $\mu$m, preferably between 30 $\mu$m and 200 $\mu$m.

**4.** Vapor barrier according to one of claims 1 to 3, wherein the layer 2 has a thickness in the range of 40 $\mu$m to 300 $\mu$m, preferably from 40 $\mu$m to 225 $\mu$m.

**5.** Vapor barrier according to one of the preceding claims, wherein the material for the layer 1 contains polyamide and/or ionomers.

**6.** Vapor barrier according to one of the preceding claims, wherein for the layer 1 the quotient for the water vapor diffusion resistance of the $s_d$ value at 25% mean relative air humidity to the $s_d$ value at 71.5% mean relative air humidity is greater than 4, preferably greater than 5.

**7.** Vapor barrier according to one of the preceding claims, wherein the layer 2 at 71.5% mean relative air humidity has an $s_d$ value in the range of 1 m to 20 m, preferably of 1 m to 15 m.

**8.** Vapor barrier according to one of the preceding claims, wherein the layer 2 is formed as a foil or a film.

**9.** Vapor barrier according to one of the preceding claims, wherein layers 1 and 2 are joined by bonding with adhesive, lamination, calendering or by coating one layer on the other.

**10.** Vapor barrier according to one of claims 1 to 9, wherein the layers 1 and 2 are produced as a multilayer film.

**11.** Vapor barrier according to one of the preceding claims, comprising at least one further layer, in particular for increasing the mechanical strength and/or water storage.

**12.** Vapor barrier according to one of the preceding claims, wherein its total thickness lies in the range of 60 $\mu$m to 700 $\mu$m, preferably of 60 $\mu$m to 600 $\mu$m.

**13.** Use of a vapor barrier according to one of the preceding claims for the sealing of building envelopes.

**14.** System comprising a vapor barrier according to one of claims 1 to 12 and a component to be sealed.

**Revendications**

**1.** Pare-vapeur, qui comprend au moins deux couches, une couche (couche 1) étant variable en fonction de l'humidité, et le quotient, pour la résistance à la diffusion de la vapeur d'eau, entre la valeur $S_d$ pour une humidité relative moyenne de l'air de 25 % et la valeur $S_d$ pour une humidité relative moyenne de l'air de 71,5 %, étant supérieure à 3, et l'autre couche (couche 2) étant pour l'essentiel indépendante de l'humidité, et le quotient, pour la résistance à la diffusion de la vapeur d'eau, entre la valeur $S_d$ pour une humidité relative moyenne de l'air de 25 % et la valeur $S_d$ pour une humidité relative moyenne de l'air de 71,5 %, étant inférieur à 1,5, la valeur $S_d$ se rapportant dans chaque cas à une détermination selon ISO 12572:2001, la couche 2 ayant une épaisseur de 40 $\mu$m à 350 $\mu$m, et le matériau de la couche 2 étant choisi dans le groupe consistant en les polyesters, les copolymères éther-ester thermoplastiques (TPEE), les polyoléfines, les polyéthylènes, le polyéthylène haute densité (PEHD), le polypropylène (PP), l'éthylène-acétate de vinyle (EVA), les polylactides, les polymères à base d'amidon, les polyacrylates, les polyuréthannes thermoplastiques (TPU) et les combinaisons de ceux-ci.

**2.** Pare-vapeur selon la revendication 1, dans lequel la couche 1 et la couche 2 ont ensemble une épaisseur comprise dans la plage de 55 $\mu$m à 550 $\mu$m, de préférence comprise entre 75 $\mu$m et 550 $\mu$m.

**3.** Pare-vapeur selon la revendication 1 ou 2, dans lequel la couche 1 a une épaisseur comprise dans la plage de 10 $\mu$m à 200 $\mu$m, de préférence entre 30 $\mu$m et 200 $\mu$m.

**4.** Pare-vapeur selon l'une des revendications 1 à 3, dans lequel la couche 2 présente une épaisseur comprise dans la plage de 40 $\mu$m à 300 $\mu$m, de préférence de 40 $\mu$m à 225 $\mu$m.

**5.** Pare-vapeur selon l'une des revendications précédentes, dans lequel le matériau de la couche 1 contient un polyamide et/ou des ionomères.

**6.** Pare-vapeur selon l'une des revendications précédentes, dans lequel le quotient, pour la résistance à la diffusion de la vapeur d'eau, entre la valeur $S_d$ pour une humidité relative moyenne de l'air de 25 % et la valeur $S_d$ pour une humidité relative moyenne de l'air de 71,5 %, est, pour la couche 1, supérieur à 4, de préférence supérieur à 5.

**7.** Pare-vapeur selon l'une des revendications précédentes, dans lequel la couche 2 présente pour une humidité relative moyenne de l'air de 71,5 % une valeur $S_d$ comprise dans la plage de 1 m à 20 m, de préférence de 1 m à 15 m.

**8.** Pare-vapeur selon l'une des revendications précédentes, dans lequel la couche 2 est conçue comme une feuille ou un film.

**9.** Pare-vapeur selon l'une des revendications précédentes, dans lequel les couches 1 et 2 sont liées l'une à l'autre par collage avec un adhésif, contrecollage, calandrage, ou par application d'une couche sur l'autre.

**10.** Pare-vapeur selon l'une des revendications 1 à 9, dans lequel les couches 1 et 2 sont fabriquées sous forme d'une feuille multicouche.

**11.** Pare-vapeur selon l'une des revendications précédentes, comprenant au moins une couche supplémentaire, en particulier pour augmenter la résistance mécanique et/ou l'emmagasinage de l'eau.

**12.** Pare-vapeur selon l'une des revendications précédentes, dont l'épaisseur totale est comprise dans la plage de 60 $\mu$m à 700 $\mu$m, de préférence de 60 $\mu$m à 600 $\mu$m.

**13.** Utilisation d'un pare-vapeur selon l'une des revendications précédentes pour étancher des enveloppes de bâtiments.

**14.** Système comprenant un pare-vapeur selon l'une des revendications 1 à 12 et un composant à étancher.

**FIG.**

(1)   $s_d$ (groß)

0 % r.F.                          85 % r.F.

(2)   $s_d$ (klein)

85 % r.F.                          0 % r.F.

$$\Delta = \frac{s_d \text{ (groß)}}{s_d \text{ (klein)}}$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10111319 A1
- EP 1372956 B1
- DE 19857483 A1
- DE 19902102 A1
- DE 19944819 A1
- AT 009694 U2
- EP 0821755 A1
- EP 2554758 A1
- US 20070015424 A1
- WO 2009065853 A1
- DE 102006018351 B4